# EUROPEAN PATENT APPLICATION

(11) **EP 4 040 551 A1**
(43) Date of publication of application: **10.08.2022**
(21) Application number: 20869682.3
(22) Date of filing: 17.07.2020
(51) Int. Cl.: H01M 10/04

(54) **ELECTRODE PAD FOR BATTERY ROLL CORE, AND CYLINDRICAL OR BUTTON BATTERY**

(30) Priority: 26.09.2019 CN 201910918345; 26.09.2019 CN 201921625508 U
(71) Applicant: Guangdong Mic-power New Energy Co., Ltd., Guangdong 516055 (CN)
(72) Inventor: CHEN, Zhiyong, Guangdong 516055 (CN); TONG, Yan, Guangdong 516055 (CN)
(74) Representative: Hübner, Gerd
(86) International application number: PCT/CN2020/102574
(87) International publication number: WO 2021/057210

(57) **Abstract**

Disclosed are an electrode sheet for a battery roll core, and a cylindrical or button battery. The electrode sheet includes a tab, a sheet-like current collector, and two electrode active materials attached to two surfaces of the sheet-like current collector respectively, wherein an edge of the electrode active material located on an inner side of a winding is indented at beginning and/or end of the winding relative to an edge of the other electrode active material so as to form a foil-free region, and one end of the tab is connected to the sheet-like current collector. The present invention is used to solve the existing problem that the electrode sheet is easy to break. The bending stress at the beginning and/or the end of the electrode sheet during winding is reduced due to the provision of the foil-free region at the beginning and/or end, thereby preventing breakage. In addition, due to the way and the technical parameters of the connection between the tab and the electrode sheet provided by the embodiments of the present invention, it is possible to prevent breakage of the electrode sheet caused by a shear force in the welding region of the tab, and improve the production efficiency and the quality of products.

## Description

### TECHNICAL FIELD

The present invention relates to the technical field of batteries, in particular to an electrode sheet for a battery roll core, and a cylindrical or button battery.

### BACKGROUND

The cylindrical battery or button battery typically includes a cover, a shell, and a roll-core type battery core or a laminated battery core. The cover and the shell are buckled together so as to form a closed space therein. The cover and the shell are metal materials, such as stainless steel. The battery core is located in the closed space. A positive tab of the battery core is connected to the cover, and a negative tab is connected to the shell. The cover serves as a positive electrode of the battery, and the shell serves as a negative electrode of the battery. A sealing ring is arranged between the positive electrode and the negative electrode. The sealing ring enables the cover and the shell to be sealed and insulated from each other.

When a current collector of the existing roll-core type battery core is spirally wound, the beginning or end of the current collector is prone to breakage; in addition, the welding region of the current collector is prone to breakage during or after welding of the current collector and the tab.

Therefore, it is necessary to provide a new technical solution to solve at least one of the above technical problems.

### SUMMARY

One objective of the present invention is to provide an electrode sheet for a battery roll core, and a cylindrical or button battery.

According to one aspect of the present invention, an electrode sheet for a battery roll core is provided. The electrode sheet for the battery roll core includes a tab, a sheet-like current collector, and two electrode active materials attached to two surfaces of the sheet-like current collector respectively, wherein an edge of the electrode active material located on an inner side of a winding is indented at the beginning and/or end of the winding relative to an edge of the other electrode active material so as to form a foil-free region, and one end of the tab is connected to the sheet-like current collector.

Optionally or alternatively, the electrode sheet is a positive electrode sheet, the electrode active materials are positive active materials, the two positive active materials are arranged at staggered positions at the beginning of the winding so as to form the foil-free region at a site where the edge is indented, and the tab is connected to the end of the sheet-like current collector and is located on one side of the sheet-like current collector opposite to the foil-free region.

Optionally or alternatively, the electrode sheet is a negative electrode sheet, the electrode active materials are negative active materials, the two negative active materials are arranged at staggered positions at the end of the winding so as to form the foil-free region at a site where the edge is indented, and the tab is connected to the end of the sheet-like current collector, is located on one side of the foil-free region, and is spaced apart from the foil-free region.

Optionally or alternatively, one end of the tab has an area accounting for 10%-90% of an overlapping region between one end of the tab and the sheet-like current collector.

Optionally or alternatively, the tab has a width accounting for 5%-95% of a length of a foil-free welding region of the sheet-like current collector.

Optionally or alternatively, an overlapping length between one end of the tab and the sheet-like current collector accounts for 5%-100% of a width of the sheet-like current collector.

Optionally or alternatively, a welding spot at one the tab is of at least one of a round disk, an ellipse or a chamfered polygon.

Optionally or alternatively, an insulating coating layer is arranged on an overlapping region of the tab and the electrode sheet, and the insulating coating layer is configured to prevent burrs on a welding spot from piercing a diaphragm.

According to another aspect of the present invention, a cylindrical or button battery is provided. The cylindrical or button battery includes an electrode roll core, an inner side steel shell and an outer side steel shell which are buckled together and enclose the electrode roll core, and an insulating sleeve arranged between the inner side steel shell and the outer side steel shell, wherein the electrode roll core includes the above electrode sheet.

Optionally or alternatively, the electrode sheet includes a positive electrode sheet and a negative electrode sheet, the positive electrode sheet and the negative electrode sheet are spirally and concentrically wound about the same circle center, two tabs on the positive electrode sheet and the negative electrode sheet are located at the end of a respective electrode sheet, and an angle between lines connecting corresponding parts of the two tabs to the circle center is less than or equal to 10°-350°.

Optionally or alternatively, the tabs on the positive electrode sheet and the negative electrode sheet are both located on a radial outer side of a curved surface of the current collector.

Optionally or alternatively, the electrode sheet includes a positive electrode sheet and a negative electrode sheet, the positive electrode sheet and the negative electrode sheet are spirally and concentrically wound about the same circle center, are provided with an electrode separator therebetween, and there are two tabs on the positive electrode sheet and the negative electrode sheet, wherein one of the tabs is located at the beginning of the roll core and the other one is located at the end of the roll core.

According to the electrode sheet for the battery roll core provided by embodiments of the present invention, the bending stress at the beginning and/or the end of the electrode sheet during winding is reduced due to the provision of the foil-free region at the beginning and/or end, thereby preventing breakage. In addition, due to the way and the technical parameters of the connection between the tab and the electrode sheet provided by the embodiments of the present invention, it is possible to prevent breakage of the electrode sheet caused by a shear force in the welding region of the tab, and improve the production efficiency and the quality of products.

Other features and advantages of the present invention will become apparent by the detailed description for exemplary embodiments of the present invention with reference to the following accompany drawings.

### BRIEF DESCRIPTION OF DRAWINGS

The accompanying drawings, which constitute a part of this description, describe the embodiments of the present invention and, together with the description, serve to explain the principles of the present invention.
FIG. 1 is a schematic structural section view according to an embodiment 1 of the present invention.
FIG. 2 is a schematic structural section view according to an embodiment 2 of the present invention.
FIG. 3 is a schematic structural front view according to an embodiment 3 of the present invention.
FIG. 4 is a schematic structural front view of another implementation according to an embodiment 3 of the present invention.
FIG. 5 is a schematic structural front view according to an embodiment 4 of the present invention.
FIG. 6 is a schematic structural front view of an electrode roll core according to an embodiment 5 of the present invention.
FIG. 7 is a schematic structural front view of a battery according to an embodiment 5 of the present invention.
FIG. 8 is a schematic structural section view of a battery according to an embodiment 6 of the present invention.

1-tab, 2-sheet-like current collector, 21-foil-free region, 22-foil-free welding region, 3-electrode active material, 4-welding spot, 5-positive electrode sheet, 6-negative electrode sheet, 7-electrode separator, 8-insulating coating layer, 100-electrode roll core, 200-inner side steel shell, 300-outer side steel shell, 400-insulating sleeve.

### DETAILED DESCRIPTION OF EMBODIMENTS

Various exemplary embodiments of the present invention are described in detail hereinafter with reference to the accompanying drawings. It should be noted that unless otherwise specified, relative arrangement, numerical expressions and values of parts and steps described in the embodiments do not limit the scope of the present invention.

The following description of the at least one exemplary embodiment is actually merely illustrative and never constitutes any limitation to the present invention and application or use thereof.

Technologies and equipment known to those of ordinary skill in the related field may not be discussed in detail, but, where appropriate, the technologies and equipment should be regarded as a part of the specification.

In all the examples shown and discussed herein, any specific value should be interpreted as merely exemplary rather than a limitation. Therefore, other examples of the exemplary embodiments may have different values.

It should be noted that similar reference numerals and letters represent similar items in the accompanying drawings below. Therefore, once a certain item is defined in one drawing, it is unnecessary to further discuss the item in the subsequent drawings.

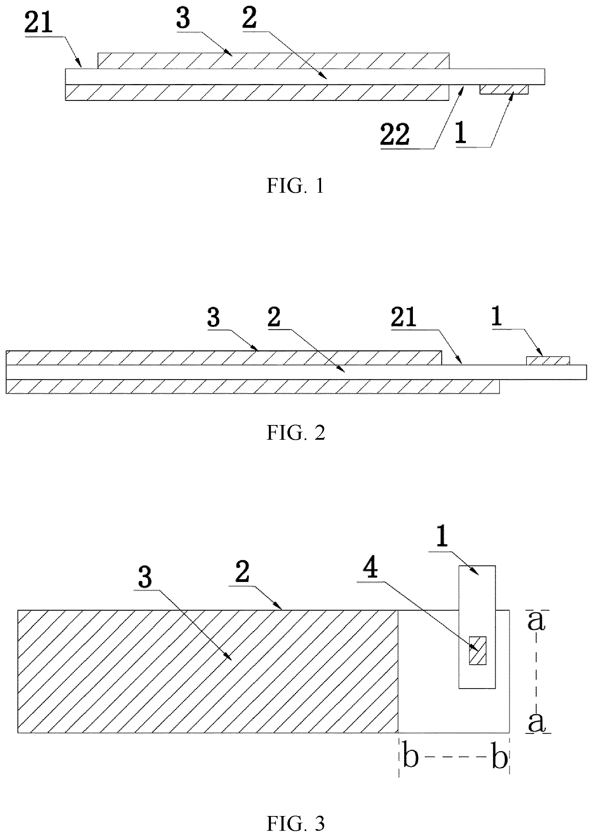

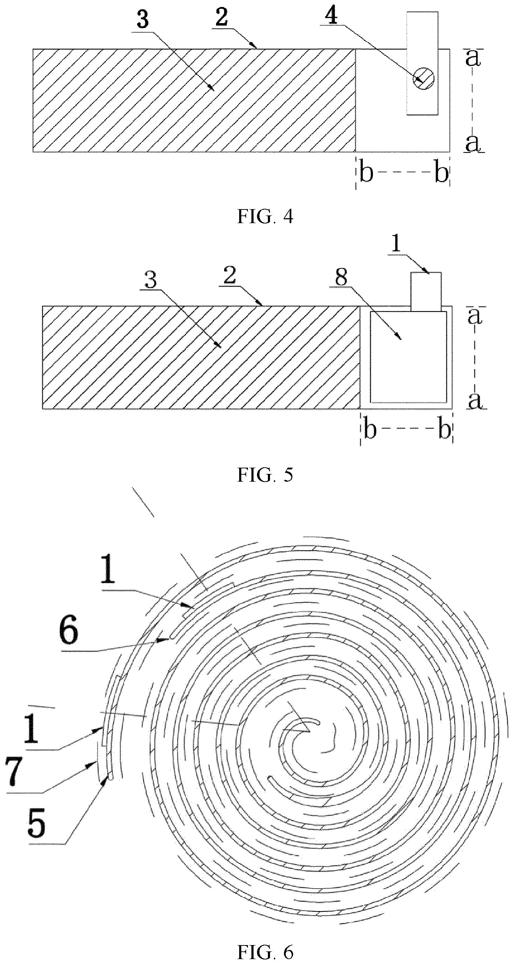

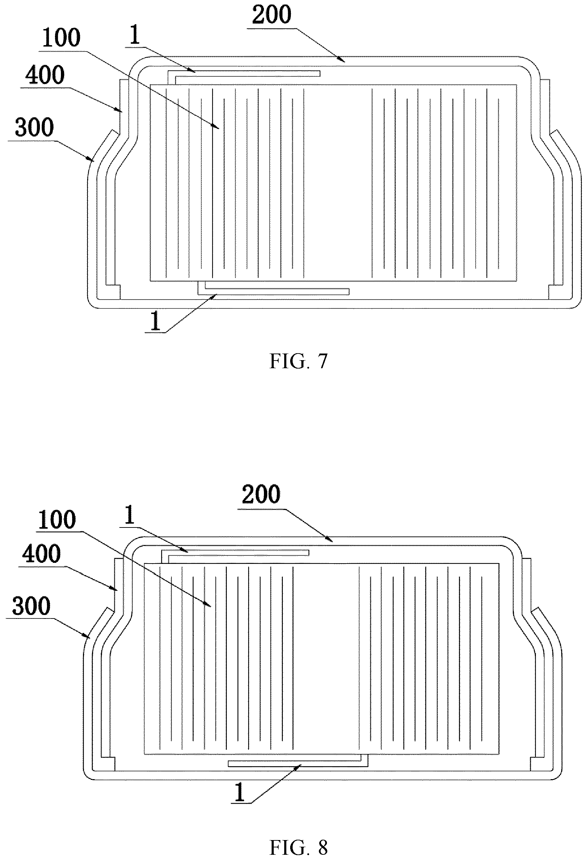

FIG. 1 is a schematic structural section view according to an embodiment 1 of the present invention. FIG. 2 is a schematic structural section view according to an embodiment 2 of the present invention. FIG. 3 is a schematic structural front view according to an embodiment 3 of the present invention. FIG. 4 is a schematic structural front view of another implementation according to an embodiment 3 of the present invention. FIG. 5 is a schematic structural front view according to an embodiment 4 of the present invention. FIG. 6 is a schematic structural front view of an electrode roll core according to an embodiment 5 of the present invention. FIG. 7 is a schematic structural front view of a battery according to an embodiment 5 of the present invention. FIG. 8 is a schematic structural section view of a battery according to an embodiment 6 of the present invention.

### Embodiment 1

As shown in FIG. 1, an electrode sheet for a battery roll core provided by the embodiment 1 of the present invention includes a tab 1, a sheet-like current collector 2, and two electrode active materials 3 respectively attached to two surfaces of the sheet-like current collector 2. In the embodiment 1, the sheet-like current collector 2 is a positive electrode sheet, and the electrode active materials 3 are positive active materials. The positive active materials are lithium cobaltate, lithium iron phosphate and the like. When the roll core is manufactured, firstly, the electrode sheet and the electrode separator are laminated together; and then they are helically wound from one end to finally form a spiral roll core. The two positive active materials 3 are arranged in staggered positions at the beginning of the winding so as to form a foil-free region 21 at a site where the edge is indented. The tab 1 is connected to an end of the sheet-like current collector 2 and is located on one side of the sheet-like current collector 2 opposite to the foil-free region 21. In this example, the foil-free region 21 is located at the center of the roll core.

Of course, it is also possible that the two positive active materials 3 is arranged in staggered positions at the end of the winding, and the tab 1 is connected to the beginning of the sheet-like current collector 2.

Of course, it is also possible that the two positive active materials 3 are arranged in staggered positions at the beginning and the end of the winding, which may be set by those skilled in the art according to actual needs.

When the current collector 2 is wound by a winding equipment, the bending stress at the beginning and/or the end of the electrode sheet during winding is reduced due to the provision of the foil-free region at the beginning and/or end of the sheet-like current collector 2, thereby preventing breakage.

In addition, since the electrode active material has a set thickness, it is prone to form extrusion during winding, resulting in peeling of the material at the edge. The foil-free region located at the beginning can form an avoidance space, thereby preventing the material at the edge from being extruded during winding.

In addition, the foil-free region can save the electrode active material, improve the space utilization rate, and improve the energy density of the battery.

### Embodiment 2

As shown in FIG. 2, an electrode sheet for a battery roll core provided by the embodiment 2 of the present invention includes a tab 1, a sheet-like current collector 2, and two electrode active materials 3 respectively attached to two surfaces of the sheet-like current collector 2. In the embodiment 2, the sheet-like current collector 2 is a negative electrode sheet, the electrode active materials 3 are negative active materials, and the negative active materials are graphite. The two negative active materials 3 are arranged at staggered positions at the end of the winding so as to form the foil-free region 21 at the site where the edge is indented. The tab 1 is connected to the end of the sheet-like current collector 2, is located on one side of the foil-free region 21, and is spaced apart from the foil-free region 21.

The winding way and the effects of the embodiment 2 are the same as those of the embodiment 1. The foil-free region 21 in the embodiment 2 may also be arranged at the beginning and/or end, which may be set by those skilled in the art according to actual needs.

### Embodiment 3

As shown in FIG. 3, the embodiment 3 discloses the way and technical parameters of the connection between one end of the tab 1 and the sheet-like current collector 2. In the figure, a-a refers to a width of a foil-free welding region 22 of the current collector 2, and b-b refers to a length of the foil-free welding region 22 of the current collector 2.

For example, a welding spot 4 at one end of the tab 1 has an area accounting for 10%-90% of the overlapping region between one end of the tab 1 and the sheet-like current collector 2. The area range of the welding spot minimizes damage to the strength of the sheet-like current collector 2 while ensuring a firm connection.

For example, the tab 1 has a width accounting for 5%-95% of the length of the foil-free welding region 22 of the sheet-like current collector 2. The width range minimizes damage to the strength of the sheet-like current collector 2 while ensuring the firm connection.

For example, the overlapping length between one end of the tab 1 and the sheet-like current collector 2 is 5%-100% of the width of the sheet-like current collector 2. The length range minimizes damage to the strength of the sheet-like current collector 2 while ensuring a firm connection.

For example, the welding spot 4 at one end of the tab 1 is of at least one polygon with a fillet, such as a rectangle and a right triangle with a fillet.

Of course, as shown in FIG. 4, the welding spot 4 may also be of one or more circles or ellipses.

Due to the way and the technical parameters of the connection between the tab and the electrode sheet provided by the embodiments of the present invention, it is possible to prevent breakage of the electrode sheet caused by a shear force in the welding region of the tab, and improve the production efficiency and the quality of products.

### Embodiment 4

As shown in FIG. 5, the embodiment 4 is basically the same as the above embodiments, except that: an insulating coating layer 8 is arranged on an overlapping region between the tab 1 and the electrode sheet 2, and the insulating coating layer 8 is configured to prevent burrs on the tab 1 and the welding spot 4 of the electrode sheet 2 from piercing a diaphragm or an electrode separator and causing a short circuit.

For example, the insulating coating layer 8 may be insulating adhesive paper adhering to the overlapping region and covering the welding spot 4.

For example, the insulating adhesive paper is made of PET or PI with a thickness of 3-20 microns.

Of course, in order to facilitate actual application, the insulating coating layer may also be attached to the opposite side of a non-welded surface of the tab 1.

In this embodiment, since the insulating coating layer 8 is arranged on the overlapping region between the tab 1 and the electrode sheet 2, it is possible to eliminate hidden danger causing short circuit and prolong the service life.

### Embodiment 5

As shown in FIG. 6 and FIG. 7, a cylindrical or button battery is provided by the embodiment 6 of the present invention and includes an electrode roll core 100, an inner side steel shell 200 and an outer side steel shell 300 which are buckled together and enclose the electrode roll core 100, and an insulating sleeve 400 arranged between the inner side steel shell 200 and the outer side steel shell 300, wherein the electrode roll core 100 includes the positive electrode sheet 5 and the negative electrode sheet 6 in the embodiment 1 and the embodiment 2. The embodiment 5 of the present invention adopts the connection mode in the embodiment 3 and the embodiment 4. The positive electrode sheet 5 and the negative electrode sheet 6 are spirally and concentrically wound about the same circle center, and are provided with the electrode separator 7 therebetween. The tabs 1 on the positive electrode sheet 5 and the negative electrode sheet 6 are both located on a radial outer side of a curved surface of the current collector.

The cylindrical or button battery provided by this embodiment achieves high production efficiency and stable product quality.

Of course, the tabs 1 on the positive electrode sheet 5 and the negative electrode sheet 6 are located on a radial outer side and a radial inner side of the curved surface of the current collector respectively, which can be set by those skilled in the art according to actual needs.

In this embodiment, the positive electrode sheet 5 ends at an outer ring, and is connected to the inner side steel shell of the cylindrical or button battery with the tab 1; and the negative electrode sheet 6 is connected to the outer side steel shell of the cylindrical or button battery with the tab 1. The corresponding inner side steel shell of the battery is a positive electrode, and the outer side steel shell is a negative electrode of the battery.

Of course, it is also possible that the negative electrode sheet 6 ends at the outer ring, and is connected to the inner side steel shell of the cylindrical or button battery with the tab 1; and the positive electrode sheet 5 is connected to the outer side steel shell of the cylindrical or button battery with the tab 1. The corresponding inner side steel shell of the battery is a positive electrode, and the outer side steel shell is a negative electrode of the battery.

When the tab 1 is connected to the outer side steel shell or the inner side steel shell of the cylindrical or button battery, welding is performed in a direction from the tab 1 to the inner wall of the steel shell. It can be spot welded, i.e., welded to the steel shell with the tab, or it can be bonded with conductive adhesive.

In this embodiment, as shown in FIG. 6, two tabs 1 on the positive electrode sheet 5 and the negative electrode sheet 6 are located at the ends of respective electrode sheets, and the angle between the lines connecting the corresponding parts of the two tabs 1 to the circle center is less than or equal to 10°-350°.

### Embodiment 6

As shown in FIG. 8, in this embodiment, the electrode sheet includes a positive electrode sheet 5 and a negative electrode sheet 6. The positive electrode sheet 5 and the negative electrode sheet 6 are spirally and concentrically wound about the same circle center, and are provided with an electrode separator 7 therebetween. There are two tabs 1 on the positive electrode sheet 5 and the negative electrode sheet 6, wherein one tab 1 is located at the beginning of the roll core and the other tab 1 is located at the end of the roll core.

Although some specific embodiments of the present invention have been illustrated in detail through the examples, those skilled in the art should understand that the above examples are merely for illustration, but not intended to limit the scope of the present invention. Those skilled in the art should understand that the above embodiments may be modified without departing from the scope and spirit of the present disclosure. The scope of the present invention is defined by the appended claims.

## Claims

1. An electrode sheet for a battery roll core, **characterized by** comprising a tab, a sheet-like current collector, and two electrode active materials attached to two surfaces of the sheet-like current collector respectively,
wherein an edge of the electrode active material located on an inner side of a winding is indented at beginning and/or end of the winding relative to an edge of the other electrode active material so as to form a foil-free region, and one end of the tab is connected to the sheet-like current collector.

2. The electrode sheet of claim 1, wherein the electrode sheet is a positive electrode sheet, the electrode active materials are positive active materials, the two positive active materials are arranged at staggered positions at the beginning of the winding so as to form the foil-free region at a site where the edge is indented, and the tab is connected to the end of the sheet-like current collector and is located on one side of the sheet-like current collector opposite to the foil-free region.

3. The electrode sheet of any one of claims 1-2, wherein the electrode sheet is a negative electrode sheet, the electrode active materials are negative active materials, the two negative active materials are arranged at staggered positions at the end of the winding so as to form the foil-free region at a site where the edge is indented, and the tab is connected to the end of the sheet-like current collector, is located on one side of the foil-free region, and is spaced apart from the foil-free region.

4. The electrode sheet of any one of claims 1-3, wherein one end of the tab has an area accounting for 10%-90% of an overlapping region between one end of the tab and the sheet-like current collector.

5. The electrode sheet of any one of claims 1-4, wherein the tab has a width accounting for 5%-95% of a length of a foil-free welding region of the sheet-like current collector.

6. The electrode sheet of any one of claims 1-5, wherein an overlapping length between one end of the tab and the sheet-like current collector accounts for 5%-100% of a width of the sheet-like current collector.

7. The electrode sheet of any one of claims 1-6, wherein a welding spot at one end of the tab is of at least one of a round disk, an ellipse or a chamfered polygon.

8. The electrode sheet of any one of claims 1-7, wherein an insulating coating layer is arranged on an overlapping region between the tab and the electrode sheet, and the insulating coating layer is configured to prevent burrs on a welding spot from piercing a diaphragm.

9. A cylindrical or button battery, comprising an electrode roll core, an inner side steel shell and an outer side steel shell which are buckled together and enclose the electrode roll core, and an insulating sleeve arranged between the inner side steel shell and the outer side steel shell, wherein the electrode roll core comprises the electrode sheet of any one of claims 1-8.

10. The cylindrical or button battery of claim 9, wherein the electrode sheet comprises a positive electrode sheet and a negative electrode sheet, the positive electrode sheet and the negative electrode sheet are spirally and concentrically wound about the same circle center, and are provided with an electrode separator therebetween, two tabs on the positive electrode sheet and the negative electrode sheet are located at the end of a respective electrode sheet, and an angle between lines connecting corresponding parts of the two tabs to the circle center is less than or equal to 10° to 350°.

11. The cylindrical or button battery of any one of claims 9-10, wherein the tabs on the positive electrode sheet and the negative electrode sheet are located on a radial outer side of a curved surface of the current collector.

12. The cylindrical or button battery of any one of claims 9-11, wherein the electrode sheet comprises a positive electrode sheet and a negative electrode sheet,
the positive electrode sheet and the negative electrode sheet are spirally and concentrically wound about the same circle center, and are provided with an electrode separator therebetween, and
there are two tabs on the positive electrode sheet and the negative electrode sheet, wherein one of the tabs is located at the beginning of the roll core and the other one is located at the end of the roll core.
